# EUROPÄISCHE PATENTSCHRIFT

(11) **EP 2 336 225 B1**
(45) Veröffentlichungstag und Bekanntmachung des Hinweises auf die Patenterteilung: **18.05.2016**
(21) Anmeldenummer: 10195289.3
(22) Anmeldetag: 16.12.2010
(51) Int. Cl.: C08J 9/00, C08J 9/12, C08J 9/16, C08J 9/18, C08J 9/22, C08L 23/00

(54) **Verfahren zur Herstellung von Polyolefin-Schaumstoffpartikeln**
Process for producing polyolefin foam particles
Procédé de fabrication de particules en mousse de polyoléfine

(30) Priorität: 17.12.2009 EP 09179565
(43) Veröffentlichungstag der Anmeldung: 22.06.2011
(73) Patentinhaber: BASF SE, 67056 Ludwigshafen am Rhein (DE)
(72) Erfinder: Mair, Gunther, 68163, Mannheim (DE); Nöthe, Armin, 67346, Speyer (DE); Lambert, Jürgen, 67377, Gommersheim (DE); Keppeler, Uwe, 67126, Hochdorf-Assenheim (DE); Schnorpfeil, Christoph, 68163, Mannheim (DE)
(74) Vertreter: BASF IP Association

(56) Entgegenhaltungen:
- EP-A1- 0 540 271
- DE-A1- 19 950 420
- US-A- 4 448 901

## Beschreibung

Die vorliegende Erfindung betrifft ein Verfahren zur Herstellung von Schaumpartikeln enthaltend mindestens ein Polyolefin, mindestens umfassend die Schritte (A) Herstellen einer Suspension enthaltend ein Granulat enthaltend mindestens ein Polyolefin, in einem Suspendiermedium, (B) Imprägnieren des in der Suspension aus Schritt (A) enthaltenen Granulates mit mindestens einem Treibmittel, um ein mit Treibmittel beladenes Granulat in Suspension zu erhalten, und (C) Entspannen und Abkühlen der in Schritt (B) erhaltenen Suspension durch Inkontaktbringen mit einem geeigneten flüssigen Kühlmittel, um Schaumpartikel zu erhalten, wobei das Mengenverhältnis K von Kühlmittel zu Suspendiermedium mindestens 0,3 beträgt.

EP 0 095 109 A1 offenbart ein Verfahren zur Herstellung von expandierten Partikeln in welchem eine Mischung von Wasser und Polyolefinharz-Partikeln, welche mit einem flüchtigen Treibmittel imprägniert wurde, unter konstanter Temperatur und konstantem Druck durch eine Blende aus dem Inneren eines Druckkessels in eine Niederdruck-Zone entspannt wird.

EP 0 256 489 A1 offenbart ein Verfahren zur Herstellung von vorgeschäumten Partikeln aus thermoplastischen Harzen, wobei eine Suspension dieser thermoplastischen Harze in einer wässrigen Suspension mit einem entsprechenden Treibmittel unter Druck imprägniert wird, und diese imprägnierten Granulate durch plötzliches Absenken des Druckes aufgeschäumt werden, wobei die Temperatur beim Aufschäumen der imprägnierten Granulate nicht geringer als 40 °C sein darf, um entsprechende vorgeschäumte Partikel zu erhalten, die einen großen durchschnittlichen Zelldurchmesser aufweisen.

In EP 1 182 225 wird ein Verfahren zur Herstellung vorexpandierter Teilchen eines Polyolfinharzes mit geringer Schwankungsbreite der Expansionsrate beschrieben, wobei die freigesetzten Teilchen zum Zeitpunkt des Vorexpandieren des Polyolefinharzes mit gesättigtem Dampf in Kontakt gebracht werden.

EP 1 262 513 B1 offenbart ein Verfahren zur Herstellung vorgeschäumter Teilchen eines Polyolefinharzes, umfassend das Dispergieren der Polyolefinharzteilchen in einem wässrigen Medium, Erwärmen der Harzteilchen auf eine Temperatur, die mindestens dem Erweichungspunkt des Polyolefinharzes entspricht, unter Druck und Freisetzen der Harzteilchen aus dem Autoklav durch eine Öffnung in eine Atmosphäre mit niedrigerem Druck als der Innendruck des Autoklaven, wobei beim Freisetzungsschritt die entstandenen vorgeschäumten Teilchen auf eine Aufpralltafel oder an eine Behälterwand prallen. Gemäß einem weiteren Anspruch wird bei diesem Freisetzungsschritt gleichzeitig mindestens 60 °C warmes Gas in Kontakt mit den Teilchen gebracht.

Aus dem beschriebenen Stand der Technik ist somit bekannt, dass für einheitliche Expansionsraten im Imprägnierkessel während des Entspannungsschritts möglichst konstante Druck und Temperaturbedingungen vorhanden sein sollten. Ebenso, dass durch zusätzliches Erwärmen im Entspannungsschritt die Expansionsrate erhöht werden kann. Gleichzeitig soll hierdurch auch die Schwankungsbreite der Expansionsrate reduziert werden.

Die bei Entspannung nach dem Stand der Technik tatsächlich erhaltene Schwankungsbreite der Expansionsrate genügt jedoch nicht den Anforderungen. Obwohl die eigentliche Expansion der Partikel nur wenige Millisekunden beträgt, erfahren die Partikel eine uneinheitliche Nachexpansion, abhängig von der Temperatur im Entspannungskessel, die sich über die Entspannungszeit ändert. Die Entspannungszeit liegt in Produktionsanlagen, in denen eine Einsatzmenge von Polyolefin zwischen 300 und 1000 kg verarbeitet wird, üblicherweise zwischen 30 und 300 sec.

Ein Schwinden der Partikel nach dem Entspannungsprozess, das je nach Schüttdichte und Treibmittelart und Treibmittelkonzentration unterschiedlich stark sein kann, führt unter schwankenden Abkühlungsbedingungen zu einer Verstärkung dieser Schwankungsbreite. Es ist somit schwierig den Expansionsfaktor (Partikelgrößenverteilung) nach dem Stand der Technik konstant zu halten.

Durch die aus dem Stand der Technik bekannten Verfahren können Schaumpartikel erhalten werden, die bezüglich ihrer Oberflächeneigenschaften noch verbesserungsbedürftig sind. Beispielsweise weisen die gemäß Stand der Technik hergestellten Partikel eine zu geringe Partikelglattheit und damit verbunden einen zu geringen Partikelglanz auf. Ein weiterer Nachteil ist, dass dadurch die Abriebfestigkeit der Partikel bei einer Verwendung zur Herstellung von Formteilen nicht genügend hoch ist, so dass von den Partikeln abgeriebener Staub die entsprechenden Herstellungsvorrichtungen verschmutzt und somit zu Ausfallzeiten führen kann. Des Weiteren weisen die Partikel des Standes der Technik eine zu hohe Verklebungsneigung im Werkzeug zur Herstellung der Formteile auf. Daher ist es oft schwierig, insbesondere komplex geformte Formteile aus den Formteilen zu entfernen, ohne eine große Anzahl von Stempeln, die das Formteil aus dem Werkzeug drücken, einzusetzen. Des Weiteren ist das Expansionsverhalten von Partikeln des Standes der Technik oft nicht ausreichend, so dass komplexe Formteile nicht mit der gleichen Dichte wie weniger komplexe Formteile erhältlich sind. Durch die ungenügend ausgestaltete Oberfläche der Partikel des Standes der Technik ist das Füllverhalten dieser Partikel oft nicht ausreichend, so dass es schwierig ist, komplex gestaltete Werkzeuge zur Herstellung entsprechender Formteile schnell und vollständig mit diesen Partikeln zu befüllen. Raue (überdehnte) Partikel führen bei der Entformung nicht nur zu Formteilen mit Verklebung, sondern auch zu schlechter Dimensionsstabilität nach der Entformung bei der Formteilherstellung.

Aufgabe der vorliegenden Erfindung ist es somit, die Nachteile des Standes der Technik zu vermeiden, insbesondere ein Verfahren zur Herstellung von Schaumpartikeln bereitzustellen, die verbesserte Oberflächeneigenschaften, d. h. glattere Oberflächen, und damit auch einen höheren Partikelglanz aufweisen. Des Weiteren sollen die daraus hergestellten Formteile ebenfalls eine glattere Oberfläche und einen höheren Glanz aufweisen. Die Abriebfestigkeit der Partikel bei einer Verwendung zur Herstellung von Formteilen soll erhöht werden, so dass von den Partikeln weniger Staub abgerieben wird. Die Verklebungsneigung der Partikel soll auch verbessert werden, um auch komplex geformte Formteile aus den Werkzeugen entfernen zu können und möglichst wenige Stempel verwenden zu müssen. Das Expansionsverhalten der Partikel soll auch verbessert werden, so dass auch komplexe Formteile mit der gleichen Dichte wie weniger komplexe Formteile erhältlich sind. Das Füllverhalten der Partikel beim Einfüllen in das Werkzeug soll auch verbessert werden. Des Weiteren sollen expandierte Partikel hergestellt werden, die eine enge Teilchengrößenverteilung aufweisen.

Diese Aufgaben werden gelöst durch das erfindungsgemäße Verfahren zur Herstellung von Schaumpartikeln enthaltend mindestens ein Polyolefin, mindestens umfassend die folgenden Schritte
(A) Herstellen einer Suspension enthaltend ein Granulat enthaltend mindestens ein Polyolefin, in einem Suspendiermedium,
(B) Imprägnieren des in der Suspension aus Schritt (A) enthaltenen Granulates mit mindestens einem Treibmittel, um ein mit Treibmittel beladenes Granulat in Suspension zu erhalten, und
(C) Entspannen und Abkühlen der in Schritt (B) erhaltenen Suspension aus Schritt (B) durch Inkontaktbringen mit einem geeigneten Kühlmittel, um Schaumpartikel zu erhalten,
wobei das Mengenverhältnis K von Kühlmittel zu Suspendiermedium mindestens 0,3 beträgt.

Die Aufgaben werden des Weiteren gelöst durch die erfindungsgemäßen Schaumpartikel bzw. durch Formteile, herstellbar aus den erfindungsgemäßen Schaumpartikeln.

Die einzelnen Schritte (A) bis (C) des erfindungsgemäßen Verfahrens werden im Fol-genden detailliert beschrieben.

### Schritt (A):

Schritt (A) des erfindungsgemäßen Verfahrens umfasst das Herstellen einer Suspension enthaltend ein Granulat enthaltend mindestens ein Polyolefin in einem Suspendiermedium.

Folgende Polyolefine sind besonders geeignet:
a) Homopolypropylen,
b) Randomcopolymere des Propylens mit 0,1 bis 15 Gew.-%, bevorzugt 0,5 bis 12 Gew.-%, eines Comonomeren. Bevorzugte Comonomere sind Ethylen, Styrol, Diene wie Butadien oder ein C₄₋₁₀-alpha-Olefin oder deren Mischungen. Besonders bevorzugte Randomcopolymere sind Copolymere von Propylen mit 0,5 bis 6 Gew.-% Ethylen oder mit 0,5 bis 15 Gew.-% 1-Buten, oder ein Terpolymer aus Propylen, 0,5 bis 6 Gew.-% Ethylen und 0,5 bis 6 Gew.-% 1-Buten, oder Copolymere aus Ethylen, Propylen und einem Dien,
c) Mischungen der unter a) oder b) genannten Polymere mit 0,1 bis 75 Gew.-%, bevorzugt 3 bis 50 Gew.-% eines Polyolefin-Elastomeren, z.B. eines Ethylen-Propylen-Blockcopolymeren mit 30 bis 70 Gew.-% Propylen,
d) Polyethylene, beispielsweise LD (low density), LLD (linear low density), MD (medium density) oder HD (high density), HMW (high molecular weight) oder UHMW (ultra high molecular weight), oder
e) Mischungen der unter a) bis d) genannten Polymere, wobei gegebenenfalls Phasenvermittler mit verwendet werden, um die Phasenanbindung der in manchen Fällen unverträglichen Polymere zu verbessern.

Erfindungsgemäß einsetzbare Polymere sind beispielsweise in EP 1 514 896 B1 genannt. In einer bevorzugten Ausführungsform des erfindungsgemäßen Verfahrens ist das wenigstens eine Polyolefin ein Propylen-Ethylen-Random-Copolymer, wobei der Gehalt an Ethylen besonders bevorzugt 1 bis 5 Gew.-%, bezogen auf das gesamte Copolymer, beträgt.

Geeignet sind sowohl mit Ziegler- als auch mit Metallocen-Katalysatoren hergestellte Polyolefine.

Der Kristallitschmelzpunkt (DSC-Maximum) der erfindungsgemäß einsetzbaren Polyolefine liegt im Allgemeinen zwischen 90 und 170 °C. Ihre Schmelzwärme, bestimmt nach der DSC-Methode, liegt vorzugsweise zwischen 20 und 300 J/g, der Schmelzindex MFI (230 °C, 2,16 kp für Propylenpolymerisate und 190 °C, 2,16 kp für Ethylenpolymerisate) nach DIN 53 735 liegt bei 0,1 bis 100 g/10 min.

Die Polyolefine können mit bis zu 50 Gew.-% eines andersartigen Thermoplasts mit einer Glastemperatur (DSC-Wendepunkt) unterhalb von 180 °C abgemischt sein. Geeignete Thermoplasten sind z. B. Polyamide in Mengen von 5 bis 40 Gew.-%, wobei der Mischung übliche Phasenvermittler, z. B. Blockcopolymerisate, wie Exxelor^{®} P 1015 (Fa. EXXON), zugesetzt werden können.

Es hat sich gezeigt, dass die Erfindung bevorzugt ohne Zumischen eines artfremden Thermoplasts durchgeführt wird. Dies ist insofern bevorzugt, als durch einen Fremdthermoplasten die Recyclierbarkeit des Polyolefins bzw. des daraus hergestellten Schaumstoffs leidet. Kautschukartige Ethylen-/Propylen-Copolymerisate, die zur Elastifizierung zugesetzt werden können, sind in diesem Sinne nicht artfremd.

In Schritt (A) des erfindungsgemäßen Verfahrens wird das Polyolefin in Form eines Granulates eingesetzt. Dieses Polyolefingranulat weist vorzugsweise mittlere Durchmesser von 0,2 bis 10 mm, insbesondere von 0,5 bis 5 mm auf. Dieses bevorzugt zylinderförmige oder runde Granulat kann durch alle dem Fachmann bekannte Verfahren hergestellt werden, insbesondere durch Extrudieren des Polyolefins, gegebenenfalls zusammen mit dem zu zumischenden Thermoplasten und weiteren Zusatzstoffen, Auspressen aus dem Extruder, gegebenenfalls Abkühlen und Granulieren. Ein solches bevorzugt in Schritt (A) eingesetztes Granulat wird auch "Minigranulat" genannt. Die einzelnen Partikel eines solchen Granulates haben im Allgemeinen ein Gewicht von 0,5 bis 10 mg/Partikel, bevorzugt 0,6 bis 1,4 mg/Partikel. Ein bevorzugtes Verfahren zur Herstellung dieses Granulates ist beispielsweise in EP 1 182 225 B1 beschrieben.

Das in Schritt (A) des erfindungsgemäßen Verfahrens bevorzugt eingesetzte Granulat enthält vorzugsweise 0,001 bis 10,0 %, besonders bevorzugt 0,01 bis 1,0 %, ganz besonders bevorzugt 0,02 bis 0,06 %, beispielsweise 0,04 bis 0,06 %, bezogen auf das Granulat, wenigstens eines Nukleierungsmittels. Geeignet sind z. B. Talkum, Paraffine und/oder Wachse sowie Ruß, Graphit und pyrogene Kieselsäuren, ferner natürliche oder synthetische Zeolithe und, gegebenenfalls modifizierte, Bentonite, besonders bevorzugt Talkum. Sie bewirken, dass ein feinzelliger Schaum entsteht, in manchen Fällen ermöglichen sie überhaupt erst das Schäumen. Das in Schritt (A) bevorzugt eingesetzte Granulat kann des Weiteren übliche Zusatzstoffe enthalten, wie Antioxidantien, Stabilisatoren, Flammschutzmittel, Wachse, Füllstoffe, Pigmente und Farbstoffe. Geeignete Additive sind dem Fachmann an sich bekannt und beispielsweise in EP 1 514 896 A1 genannt.

Das Granulat enthaltend mindestens ein Polyolefin wird in Schritt (A) des erfindungsgemäßen Verfahrens in einem geeigneten Suspendiermedium suspendiert. Im Allgemeinen sind alle dem Fachmann als geeignet bekannten Suspendiermedien verwendbar, bei denen gewährleistet ist, dass sich das eingesetzte Granulat darin nicht löst. Erfindungsgemäß besonders geeignete Suspendiermedien sind beispielsweise Wasser, polare organische Lösungsmittel, beispielsweise Alkohole wie Methanol, Ethanol, Propanole wie iso-Propanol, Glycerin, Ethylenglycol, oder Ketone, wie Aceton, oder Mischungen davon. Bevorzugt wird in Schritt (A) des erfindungsgemäßen Verfahrens als Suspendiermedium eine Mischung von Wasser und Ethanol, beispielsweise 70 bis 90 Gew.-% Wasser und 10 bis 30 Gew.-% Ethanol, oder Wasser, besonders bevorzugt Wasser, verwendet.

Die Menge an Suspendiermedium, bevorzugt Wasser, in der Suspension wird im Allgemeinen so gewählt, dass das Phasenverhältnis von in Schritt (A) eingesetztem Granulat zu Suspendiermedium > 0,2, bevorzugt > 0,4, beträgt. Das Phasenverhältnis von in Schritt (A) eingesetztem Granulat zu Suspendiermedium beträgt im Allgemeinen < 0,90, bevorzugt < 0,80, besonders bevorzugt < 0,70.

Das erfindungsgemäße Phasenverhältnis betrifft das Verhältnis von Granulat, gemessen in Kilogramm, zu Suspendiermedium, welches bevorzugt Wasser ist, ebenfalls in Kilogramm. Dem Fachmann ist bekannt, wie das erfindungsgemäße Verhältnis eingestellt werden kann, beispielsweise beträgt bei 500 kg Granulat in 1000 kg Wasser das Phasenverhältnis Granulat zu Wasser 0,5.

Die Menge an Granulat enthaltend mindestens ein Polyolefin, welches in die Suspension gemäß Schritt (A) eingebracht wird, ergibt sich aus dem oben beschriebenen Phasenverhältnis von Granulat zu Suspendiermedium.

Bevorzugt wird das Granulat enthaltend mindestens ein Polyolefin in einem Rührreaktor in Wasser suspendiert. Dabei werden bevorzugt Suspendierhilfsmittel zugesetzt, um eine gleichmäßige Verteilung des Granulates im Suspendiermedium zu gewährleisten. Geeignete Suspendierhilfsmittel sind wasserunlösliche anorganische Stabilisatoren, wie Tricalciumphosphat, Magnesiumpyrophosphat, Metallcarbonate, ferner Polyvinylalkohol und Tenside, wie Natriumdodecyl-arylsulfonat. Diese Suspendierhilfsmittel, insbesondere die genannten wasserunlöslichen anorganischen Stabilisatoren, werden üblicherweise in Mengen von 0,005 bis 10 Gew.%, bezogen auf die gesamte Suspension, eingesetzt. Tenside, beispielsweise Natriumdodecyl-arylsulfonat, werden üblicherweise in einer Menge von 2 bis 2000 ppm, insbesondere 2 bis 50 ppm, bezogen auf die gesamte Suspension, eingesetzt.

Schritt (A) des erfindungsgemäßen Verfahrens kann bei allen geeigneten Temperaturen durchgeführt werden. Diese Temperaturen sind dem Fachmann bekannt, beispielsweise wird Schritt (A) des erfindungsgemäßen Verfahrens im Allgemeinen bei einer Temperatur durchgeführt, bei der das verwendete Suspendiermedium flüssig ist, beispielsweise bei einer Temperatur von 15 bis 35 °C, besonders bevorzugt bei Umgebungstemperatur.

### Schritt (B):

Schritt (B) des erfindungsgemäßen Verfahrens umfasst das Imprägnieren des in der Suspension aus Schritt (A) enthaltenen Granulates mit mindestens einem Treibmittel, um ein mit Treibmittel beladenes Granulat in Suspension zu erhalten.

In Schritt (B) des erfindungsgemäßen Verfahrens wird beispielsweise absatzweise in einem Imprägnierbehälter, z.B. in einem Rührkesselreaktor gearbeitet. In dem Reaktor, beispielsweise in einem Imprägnierkessel, liegt im Allgemeinen die Suspension aus Schritt (A) des erfindungsgemäßen Verfahrens vor, enthaltend das mindestens eine Polyolefin, bevorzugt als Minigranulat, in Wasser als Suspendiermedium, sowie gegebenenfalls ein Suspendierhilfsmittel. Zu dieser Suspension wird nun bevorzugt mindestens ein Treibmittel zudosiert.

Im Allgemeinen können alle dem Fachmann bekannten Treibmittel eingesetzt werden. Der Siedepunkt des Treibmittels liegt im Allgemeinen bei Normaldruck zwischen -25 und 150 °C, insbesondere zwischen -10 und 125 °C.

Das Treibmittel ist vorzugsweise ein linearer oder cyclischer aliphatischer Kohlenwasserstoff, wie Methan, Ethan, Propan, Butan, iso-Butan, Pentane, Cyclopentan, Hexane und Heptane, halogenierte Kohlenwasserstoffe wie Dichlordifluormethan, Trichlormonofluormethan, ein Alkohol, wie Methanol, Ethanol, n-Propanol, iso-Propanol und n-Butanol, ein Keton, wie 3,3-Dimethyl-2-butanon und 4-Methyl-2-pentanon, ein Ether, Ester oder Stickstoff, Luft oder Kohlendioxid. Auch Treibmittelmischungen können eingesetzt werden. Besonders bevorzugt wird Butan oder Kohlendioxid und/oder Stickstoff eingesetzt.

Das mindestens eine Treibmittel wird im Allgemeinen in einer Menge von 1 bis 50 Gew.-%, bevorzugt 1 bis 30 Gew.-%, besonders bevorzugt 2 bis 25 Gew.-%, jeweils bezogen auf das Granulat, eingesetzt. Es kann auf einmal oder in Teilportionen zugeführt werden.

Der Reaktorinhalt wird im Allgemeinen auf eine Imprägniertemperatur von üblicherweise mindestens 100 °C erhitzt. Die Treibmittelzugabe kann dabei vor, während oder nach dem Aufheizen des Reaktorinhalts, bevorzugt vor dem Aufheizen, erfolgen. Die Imprägniertemperatur sollte in der Nähe der Erweichungstemperatur des Polyolefins liegen, beispielsweise 40 °C unter bis 25 °C über der Schmelztemperatur (Kristallitschmelzpunkt) des Polyolefins. Bevorzugt sind, insbesondere bei Polypropylen, Imprägniertemperaturen von 110 bis 180 °C, insbesondere 130 bis 160 °C.

Je nach Menge und Art des Treibmittels sowie nach der Höhe der Temperatur stellt sich im verschlossenen Reaktor ein Druck (Imprägnierdruck) ein, der im Allgemeinen 2 bis 100 bar (absolut) beträgt. Erforderlichenfalls kann man den Druck durch ein Druckregelventil oder Nachpressen von Treibmittel regulieren. Durch die bei den Imprägnierbedingungen vorliegende erhöhte Temperatur und den Überdruck diffundiert Treibmittel in die Polymergranulatpartikel hinein. Die Imprägnierdauer beträgt im Allgemeinen 0,3 bis 10 Stunden.

Nach dem erfindungsgemäßen Schritt (B) wird ein mit Treibmittel beladenes Granulat in Suspension erhalten.

### Schritt (C)

Schritt (C) des erfindungsgemäßen Verfahrens umfasst das Entspannen und Abkühlen der in Schritt (B) erhaltenen Suspension durch Inkontaktbringen mit einem geeigneten Kühlmittel, um Schaumpartikel zu erhalten, wobei das Gewichtsverhältnis von Kühlmittel zu dem in Schritt (A) eingesetzten Suspendiermedium mindestens 0,3, bevorzugt mindestens 0,6, besonders bevorzugt mindestens 0,9, beträgt.

Das Gewichtsverhältnis von Kühlmitte zu dem in Schritt (A) eingesetzten Suspendiermedium beträgt im Allgemeinen höchstens 20, bevorzugt höchstens 15, besonders bevorzugt höchstens 10.

Üblicherweise wird in Schritt (C) des erfindungsgemäßen Verfahrens die Suspension durch eine geeignete Vorrichtung entspannt. Bevorzugt verlässt die Suspension den Imprägnierkessel zunächst durch ein Ventil. Zur Beruhigung des Entspannungsstrahls und Ausbildung einer laminaren Strömung kann dieser anschließend bevorzugt durch ein kurzes Stück eines Entspannungsrohrs geführt werden, das am Ende eine Lochblende trägt. Durch Länge und Durchmesser des Entspannungsrohrs sowie Durchmesser der Lochblende kann die Entspannungszeit kontrolliert werden.

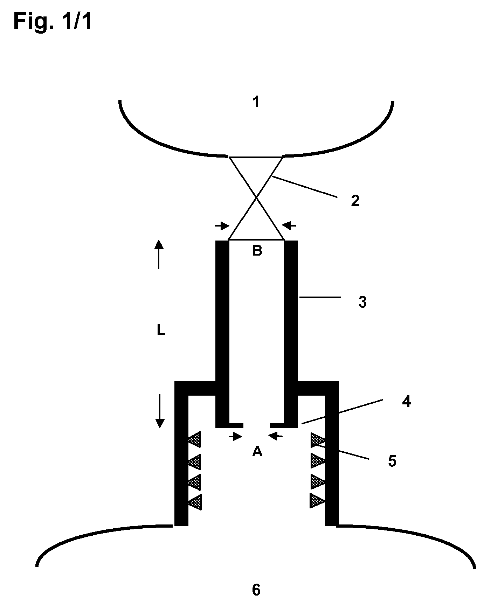

Das Entspannungsrohr hat üblicherweise eine Länge L von 0 bis 500 mm und einen Innendurchmesser B von 20 bis 40 mm. Der Durchmesser A der Lochblende kann zwischen 5 und 40 mm variieren. Der schematische Aufbau einer bevorzugten Vorrichtung ist in Figur 1 dargestellt.

Man kann die Suspension unmittelbar auf Atmosphärendruck, beispielsweise 1013 mbar, entspannen. Bevorzugt wird jedoch in einen Zwischenbehälter entspannt, dessen Druck zum Aufschäumen der Polyolefinpartikel ausreicht, jedoch über Atmosphärendruck liegen kann. Beispielsweise entspannt man auf einen Druck von z. B. 0,5 bis 5, insbesondere 1 bis 3 bar (absolut). Während des Entspannens kann man im Imprägnierbehälter den Imprägnierdruck konstant halten, indem man Treibmittel nachpresst. Während des Entspannens dehnt sich das in dem Granulat enthaltene Treibmittel aus, so dass expandierte Partikel erhalten werden. Somit wird nach dem Entspannen eine Suspension von expandierten Partikeln erhalten.

Die eigentliche Expansion der Partikel dauert nur wenige Millisekunden. Die Partikelgeometrie wird jedoch erst eingefroren, wenn die Kristallisationstemperatur des Polymeren unterschritten wird. Bei dem in den Beispielen verwendeten Polymer liegt dieser Kristallisationspunkt beispielsweise bei ca. 106 °C (Bestimmung mittels DSC).

Es ist Stand der Technik, die Bedingungen bezüglich Temperatur und Druck innerhalb des Imprägnierkessels während der Entspannung in Schritt (C) konstant zu halten. Ziel des erfindungsgemäßen Verfahrens ist es, dass jedes einzelne Partikel auch nach dem Verlassen des Imprägnierkessels durch eine geeignete Vorrichtung ebenfalls möglichst gleiche Bedingungen bis zum Erreichen dieses Kristallisationspunktes erfährt.

Erfindungsgemäß wird daher die in Schritt (C) des erfindungsgemäßen Verfahrens erhaltene Suspension beim Entspannen als Entspannungsstrahl unmittelbar nach dem Verlassen der Entspannungseinrichtung mit einem geeigneten Kühlmittel abgekühlt, wobei das Mengenverhältnis von Kühlmittel zu dem in Schritt (A) eingesetzten Suspendiermedium erfindungsgemäß mindestens 0,3, bevorzugt mindestens 0,6, besonders bevorzugt mindestens 0,9 beträgt.

Geeignete flüssige Kühlmittel sind dem Fachmann bekannt, beispielsweise Wasser, polare organische Lösungsmittel, beispielsweise Alkohole wie Methanol, Ethanol, Propanole, oder Ketone, wie Aceton, oder Mischungen davon. In einer besonders bevorzugten Ausführungsform des erfindungsgemäßen Verfahrens ist das Kühlmittel in Schritt (C) Wasser.

In einer weiteren erfindungsgemäßen Ausführungsform kann in Schritt (C) als Kühlmittel auch ein Gas eingesetzt werden. Beispielsweise kann flüssiger Stickstoff mit einer Temperatur von <-195,8 °C eingedüst werden, oder verflüssigtes CO₂, beispielsweise aus einer Druckgasflasche. Ebenso kann CO₂, das durch Sublimation von festem CO₂ mit einer Temperatur von -78 °C entstanden ist, durch die Düsen eingeblasen werden.

Die vorliegende Erfindung betrifft auch ein Verfahren zur Herstellung von Schaumpartikeln enthaltend mindestens ein Polyolefin, mindestens umfassend die folgenden Schritte
(D) Herstellen einer Suspension enthaltend ein Granulat enthaltend mindestens ein Polyolefin, in einem Suspendiermedium,
(E) Imprägnieren des in der Suspension aus Schritt (D) enthaltenen Granulates mit mindestens einem Treibmittel, um ein mit Treibmittel beladenes Granulat in Suspension zu erhalten, und
(F) Entspannen und Abkühlen der in Schritt (E) erhaltenen Suspension durch Inkontaktbringen mit einem geeigneten Kühlmittel, um Schaumpartikel zu erhalten,
wobei das Kühlmittel in Schritt (F) ein Gas ist mit einer Temperatur < 0 °C.

Bei diesem Verfahren entsprechen die Schritte (D) und (E) den oben beschriebenen Schritten (A) und (B). In Schritt (F) wird erfindungsgemäß ein Kühlmittel eingesetzt, welches ein Gas mit einer Temperatur < 0 °C, ist. Geeignete Gase sind oben genannt, beispielsweise Stickstoff, welches bevorzugt durch Verdampfen von flüssigem Stickstoff erhalten wird, oder Kohlendioxid, welches durch Sublimation von festem Kohlendioxid erhalten wird.

Das Abkühlen in Schritt (C) des erfindungsgemäßen Verfahrens wird bevorzugt durchgeführt, indem der Entspannungsstrahl mit wenigstens einem Kühlmittelstrahl, insbesondere mit mehreren Kühlmittelstrahlen, in Kontakt gebracht wird, wobei das entsprechende Mengenverhältnis, beispielsweise durch die Fließgeschwindigkeit und/oder - menge der beiden Ströme, zwischen Kühlmittel und Suspendiermedium gewährleistet ist. In einer bevorzugten Ausführungsform von Schritt (C) des erfindungsgemäßen Verfahrens erfolgt das Inkontaktbringen durch Besprühen. Beispielsweise bilden mehrere Kühlmittelstrahlen, die bevorzugt ringförmig angeordnet sind, wobei das Kühlmittel in Richtung Mitte des gebildeten Rings gesprüht wird, eine Kühlmittelfläche, durch die der Entspannungsstrahl geführt wird. In einer weiteren bevorzugten Ausführungsform sind mehrere Ringe von Kühlmittelstrahlen in einem Zylinder hintereinander angeordnet. Diese bevorzugte Ausführungsform bewirkt, dass die Verweilzeit des Entspannungsstrahls in der kühlen Zone verlängert wird, um so die Effizienz des Kühlschrittes zu erhöhen. In einer weiteren bevorzugten Ausführungsform wird das Kühlmittel durch Düsen in möglichst kleine Tropfen überführt, bevorzugt vernebelt. Diese Ausführungsform ist beispielhaft in Figur 1 dargestellt.

In einer bevorzugten Ausführungsform weist das flüssige Kühlmittel eine Temperatur von weniger als 50 °C, besonders bevorzugt weniger als 40 °C, ganz besonders weniger als 30 °C, beispielsweise 25 °C, auf. Das Kühlmittel weist im Allgemeinen eine Mindesttemperatur von wenigstens 5 °C, bevorzugt wenigstens 10 °C, auf. Bei Verwendung von Gas aus flüssigen Stickstoff bzw. flüssigem oder festem CO₂ als Kühlmittel liegen die Kühlmitteltemperaturen entsprechend niedriger.

Die Partikelgeometrie wird somit nach dem Verlassen des Imprägnierkessels erfindungsgemäß stets zum gleichen Zeitpunkt eingefroren. Die Schüttdichte der so expandierten Partikel ist üblicherweise höher als bei einem Entspannungsvorgang ohne Kühlung.

Durch die Art des Kühlmittels (flüssig öder gasförmig) der Temperatur und Strömungsvolumen des Kühlmittels und dem Volumen der Kühlzone (Verweilzeit) kann der Temperaturgradient zwischen Kühlmittel und Oberflächentemperatur bzw. Innentemperatur des expandierten Partikels gesteuert werden. Ziel der Kühlung ist, dass lediglich die Oberfläche der Partikel, die letztlich die äußere Geometrie des Partikels bestimmt, erstarrt. Auf diese Weise können expandierte Partikel mit enger Partikelgrößenverteilung erhalten werden, die gleichzeitig eine gute Expandierbarkeit bei der späteren Formteilherstellung (Schritt H) aufweisen. Die Partikel zeigen hierdurch über ihren Querschnitt einen Dichtegradient bzw. eine integrale Zellgrößenverteilung.

Die Intensität der Kühlung ist auch von der Art des verwendeten Treibmittels d. h. von dessen Expansionsvermögen und dessen Löslichkeit bzw. Diffusionsverhalten in dem verwendeten Polymer abhängig.

Nach dem erfindungsgemäßen Abkühlen wird eine Suspension von expandierten Partikeln enthaltend mindestens ein Polyolefin, so genannte Polyolefinpartikel, erhalten. Die expandierten Partikel können in üblicher Weise aus der Suspension abgetrennt werden, beispielsweise durch Filtrieren, beispielsweise mit einem Maschen- oder Bogensieb oder über eine kontinuierlich arbeitende Zentrifuge.

Des Weiteren kann gegebenenfalls vor oder nach dem Abtrennen noch anhaftendes Suspendier- und/oder Suspendierhilfsmittel entfernt werden. Die expandierten Polyolefinpartikel können anschließend gewaschen und getrocknet werden.

Die nach Schritt (C) des erfindungsgemäßen Verfahrens erhaltenen expandierten Polyolefinpartikel weisen bevorzugt eine Schüttdichte von 5 bis 300 g/l, besonders bevorzugt von 10 bis 200 g/l, beispielsweise 50 bis 70 g/l auf.

In einer weiteren Ausführungsform des erfindungsgemäßen Verfahrens werden die in Schritt (C) erhaltenen expandierten Partikel (expandierte Partikel I) weiter aufgeschäumt, um expandierte Partikel II mit einer geringeren Schüttdichte zu erhalten. Dieser Schritt wird auch "Nachschäumen" genannt. Dieser Zusatzschritt wird insbesondere angewandt, um den Transport und Lagervorteil von Partikeln mit hohen Schüttdichten zu nutzen. Eine benötigte niedrige Schüttdichte kann dann erst bei Bedarf hergestellt werden.

Verfahren, um die in Schritt (C) des erfindungsgemäßen Verfahrens erhaltenen expandierten Partikel I weiter aufzuschäumen, sind dem Fachmann bekannt und werden beispielsweise in EP 1 533 335 B1 beschrieben.

Die Polyolefinpartikel, die in Schritt (C) erhalten werden d. h. als expandierte Polyolefinpartikel I, können gegebenenfalls vor dem Nachschäumen mit einem Antiverklebungsmittel versehen werden. Dies geschieht in einer bevorzugten Ausführungsform durch Beschichten. Typische Verklebungsmittel sind ebenfalls in der EP 1 533 335 B1 beschrieben.

Das Verhältnis von Schüttdichte der expandierten Partikel I zu der Schüttdichte der nachgeschäumten expandierten Partikel II, der so genannte Expandierfaktor, liegt besonders bevorzugt bei 1,2 bis 3.

Die erfindungsgemäß hergestellten expandierten Polyolefinpartikel (expandierte Partikel I oder II) weisen im Allgemeinen eine Zellzahl von 1 bis 500 Zellen/mm², vorzugsweise 2 bis 200 Zellen/mm², insbesondere 16 bis 100 Zellen/mm², auf.

Die expandierten Partikel I oder II sind in der Regel zumindest annähernd kugelförmig und weisen üblicherweise einen Durchmesser von 0,2 bis 20 mm, bevorzugt 0,5 bis 15 mm und insbesondere 1 bis 12 mm auf. Bei nicht kugelförmigen, z. B. länglichen oder zylinderförmigen Partikeln, ist mit Durchmesser die längste Abmessung gemeint.

Die erfindungsgemäß hergestellten expandierten Partikel I oder II zeichnen sich durch eine besonders glatte Oberfläche, ein vorteilhaftes Expansionsverhalten, eine geringe Verklebungsneigung, einen verbesserten Partikelglanz, eine erhöhte Abriebfestigkeit und ein verbessertes Füllverhalten aus.

Daher betrifft die vorliegende Anmeldung auch expandierte Partikel, herstellbar, bevorzugt hergestellt, durch das erfindungsgemäße Verfahren.

Die Polyolefinpartikel können gegebenenfalls nach dem Verschäumen, d. h. als expandierte Polyolefinpartikel I, die in Schritt (C) erhalten werden und die daraus hergestellten expandierten Polyolefinpartikel II, mit einem Antistatikum versehen werden. Dies geschieht in einer bevorzugten Ausführungsform durch Beschichten.

Aus den erfindungsgemäß hergestellten expandierten Polyolefinpartikeln I oder II kann man Schaumstoffe herstellen, beispielsweise indem man sie in einer geschlossenen Form unter Wärmeeinwirkung miteinander verschweißt. Dazu füllt man die Partikel in die Form und leitet nach Schließen der Form Wasserdampf oder Heißluft ein, wodurch die Partikel weiter expandieren und miteinander zum Schaumstoff, vorzugsweise mit einer Dichte im Bereich von 8 bis 300 g/l, verschweißen. Die Schaumstoffe können Halbzeuge sein, beispielsweise Platten, Profile oder Bahnen, oder fertige Formteile mit einfacher oder komplizierter Geometrie. Demnach schließt der Begriff Polyolefin-Schaumstoff, Schaumstoffhalbzeuge und Schaumstoff-Formteile ein.

Die vorliegende Erfindung betrifft daher auch einen Schaumstoff, enthaltend expandierte Partikel I oder II, herstellbar, bevorzugt hergestellt, durch das erfindungsgemäße Verfahren.

Des Weiteren betrifft die vorliegende Erfindung ein Formteil, herstellbar, bevorzugt hergestellt, aus den erfindungsgemäß herstellbaren expandierten Partikeln I und II.

Die vorliegende Erfindung betrifft auch ein Formteil, enthaltend durch das erfindungsgemäße Verfahren herstellbare expandierte Partikel I oder II.

Die vorliegende Erfindung betrifft auch ein Verfahren zur Herstellung eines Formteils, umfassend wenigstens die Schritte
(G) Herstellen von expandierten Partikeln I und II nach dem oben genannten erfindungsgemäßen Verfahren und
(H) Aufschäumen der Schaumpartikel aus Schritt (G) in einer entsprechenden Form, um ein Formteil zu erhalten.

Bei diesem Verfahren werden in Schritt (G) zunächst expandierte Partikel gemäß den Schritten (A), (B) und (C) bzw. (D), (E) und (F) wie oben beschrieben hergestellt. Optional können auch zusätzlich aus den expandierten Partikeln I die Partikel II durch Nachschäumen hergestellt werden. Das zu den Schritten (A) bis (F) Gesagte gilt daher entsprechend.

Schritt (H) des erfindungsgemäßen Verfahrens umfasst das Aufschäumen der expandierten Partikel aus Schritt (G) in einer entsprechenden Form, um ein Formteil zu erhalten.

In einer bevorzugten Ausführungsform wird Schritt (H) beispielsweise durchgeführt, indem man die in Schritt (G) erhaltenen expandierten Partikel in einer geschlossenen Form unter Wärmeeinwirkung miteinander verschweißt. Dazu füllt man die Partikel bevorzugt in die Form und leitet nach Schließen der Form Wasserdampf oder Heißluft ein, wodurch die Partikel weiter expandieren und miteinander zum Formteil, vorzugsweise mit einer Dichte im Bereich von 8 bis 300 g/l, verschweißen. Das Verhältnis der Dichte des Formteils zu der Schüttdichte der expandierten Partikel beträgt dabei im Allgemeinen > 1,1.

In einer ganz besonders bevorzugten Ausführungsform des erfindungsgemäßen Verfahrens werden die Formteile nach dem Fachmann bekannten Verfahren wie Druckfüllverfahren oder Kompressionsverfahren, dem Tauschkantenverfahren, bzw. Crack-Spalt-Verfahren oder nach vorheriger Druckbeladung, erhalten. Entsprechende Verfahren sind in DE-A 25 42 453 und EP-A-0 072 499 offenbart.

Die vorliegende Erfindung betrifft auch die Verwendung der erfindungsgemäß herstellbaren expandierten Partikel zur Herstellung von Formteilen.

### Figur

Figur 1 zeigt eine bevorzugte Vorrichtung, in der das erfindungsgemäße Verfahren durchgeführt wird. L beschreibt die Länge des Entspannungsrohres und beträgt üblicherweise 0 bis 500 mm. B beschreibt den Innendurchmesser und beträgt üblicherweise 20 bis 40 mm. A beschreibt den Durchmesser Lochblende und beträgt üblicherweise 5 bis 40 mm. In Figur 1 haben die weiteren Bezugszeichen die folgenden Bedeutungen:
- 1: Imprägnierkessel
- 2: Auslassventil
- 3: Entspannungsrohr
- 4: Blende
- 5: Düse
- 6: Entspannungskessel

### Beispiele

Zur Berechnung der Siebgüte S (siehe Tabelle 1) wird die folgende Formel verwendet:
Siebgüte S = (obere Maschenweite - untere Maschenweite)/obere Maschenweite, z. B. S = (4,0 - 3,5)/4,0 = 0,125

### Testmethoden

### Rührtest:

In einem 10-I-Meßzylinder mit einem Blattrührer aus Edelstahl mit den Abmessungen 140 mm Breite und 50 mm Höhe, abgerundete Blattform, werden 2 I Partikel eingefüllt und diese 30 min bei 800 Upm (Umdrehungen pro Minute) gerührt. Danach wird eine Klebefolie auf beide Seiten des Rührblattes aufgedrückt, wieder abgezogen und auf Klarsichtfolie geklebt. Der Verschmutzungsgrad der Klebefolie ist ein Maß für die Staubbildung und damit der Abriebfestigkeit der untersuchten Partikel.

Der Verschmutzungsgrad wird visuell beurteilt, wobei folgende Kriterien gelten:
- Note 1:: Staubabdruck kaum sichtbar
- Note 2:: Staubabdruck ist hellgrau
- Note 3:: Staubabdruck ist grau ohne schwarze Stellen
- Note 4:: Staubabdruck ist grau mit wenigen schwarzen Stellen
- Note 5:: Staubabdruck ist schwarz mit einem mehr als 3 mm breiten Streifen
- Note 6:: Staubabdruck ist schwarz und bedeckt mehrere cm²

### Laborsiebung

Die Bestimmung der Partikelgrößenverteilung erfolgt eine Siebanalyse in Anlehnung an DIN 53477 bzw. DIN 66165, Teil 1, Verfahren F mit einer Plansiebmachine d. h. durch horizontale, kreisförmige Bewegung des Siebsatzes unter Verwendung von Analysensieben nach DIN ISO 33310-1.

### Glanzgrad

Der Glanzgrad korreliert direkt mit der Ebenheit der Oberfläche von Partikel oder Formteil. Er wird visuell beurteilt.
- Θ: extrem raue, matte Oberfläche, geringer Glanz
- ○: leicht unebene Oberfläche, mittlerer Glanz
- +: glatte, homogene Oberfläche, hoher Glanz

### Verklebungsneigung

Das Entformungsverhalten, d.h. die Verklebungsneigung des Formteils zum Werkzeug kann durch unterschiedliche Maßzahlen bewertet werden. Bei großen Formteilen wie z. B. Blöcken ist die Anzahl an Entformungsschiebern, die notwendig ist, um das Formteil aus dem Werkzeug zu befördern, ohne es zu beschädigen, ein direktes Maß für die Verklebungsneigung. Bei filigraneren Formteilen, wie z. B. Sonnenblenden (Halbschalen) wird die Verklebungsneigung besser visuell beurteilt.
- hoch: beim Entformungsvorgang bleiben mehr als 20% der Formteile in der Form hängen
- gering: beim Entformungsvorgang bleiben weniger als 2% der Formteile in der Form hängen

### Allgemeine Versuchsbeschreibung (Schritte (A)-(B)-(C)):

Das erfindungsgemäß eingesetzte Basispolymer ist ein Propylen-Ethylen-Copolymer mit einem MFI (230 °C; 2,16kp) von 8 g/10 min und einem Schmelzpunkt von 146 °C, gemessen durch DSC nach ISO 11357/3 mit einer Aufheizrate von 10 °C/min, 2. Lauf.

100 Gewichtsteile (entsprechend 38,4 Gew.-%, bezogen auf die gesamte Suspension) des Propylen-Ethylen-Random-Copolymer-Granulates (Minigranulat) mit einem Partikelgewicht von ca. 1 mg, 160 Gewichtsteile (entsprechend 61,5 Gew.-%, bezogen auf die gesamte Suspension) Wasser, 0,3 Gewichtsteile Tricalciumphosphat, 0,002 Gewichtsteile einer oberflächenaktiven Substanz (Na-Alkylsulfonat), 15 bar Stickstoff, und die entsprechende Menge Butan werden unter Rühren bis zur Imprägniertemperatur erhitzt und anschließend über eine Entspannungsvorrichtung entspannt.

### Vergleichsbeispiel 1:

Gemäß allgemeiner Versuchsbeschreibung, wobei mit 17 bar Stickstoff, 0,4 Gew.-% Butan (bezogen auf die eingesetzte Menge Minigranulat) bei 156,7 °C Entspannungstemperatur zu einer Schüttdichte von 62 g/l geschäumt wird. Der Entspannungsstrahl wird nicht explizit gekühlt, d. h. K ist 0. Das Produkt wird zwischen den Maschenweiten 2,65 mm und 2,24 mm gesiebt, druckbeladen, d. h. die Zellen werden mit Luft bei ca. 4 bar beaufschlagt, und auf eine Schüttdichte von 21,0 g/l nachgeschäumt. Die Partikelgrößenverteilung wird in Tabelle 1 wiedergegeben.

### Beispiel 2

Gemäß allgemeiner Versuchsbeschreibung, wobei mit 17 bar N₂, 1,7 Gew.-% Butan (bezogen auf die eingesetzte Menge Minigranulat) bei einer Entspannungstemperatur von 149,4 °C zu einer Schüttdichte von 58 g/l geschäumt wird. Der Entspannungsstrahl wird mit Wasser mit einem Volumenstrom von 50 m³/h und einer Temperatur von 25 °C mit einem Mengenverhältnis K von Kühlmittel zu Suspendiermittel von 0,98 gekühlt. Das Produkt wird wie bei Vergleichsbeispiel 1 gesiebt, druckbeladen und auf eine Schüttdichte von 20,5 g/l nachgeschäumt. Die Partikelgrößenverteilung ist in Tabelle 1 wiedergegeben.

**Tabelle 1: Partikelgrößenverteilung als Siebverteilung des nachgeschäumten Produktes, Angaben in Gew.-% auf den Sieben**

| | **Laborsiebung** | | |
|---|---|---|---|
| **Beispiel** | **4,0 mm** | **3,5 mm** | **3,15 mm** |
| Vergleichsbeispiel 1 | 32 | 47 | 11 |
| Beispiel 2 | 10 | 72 | 16 |

Tabelle 1 zeigt, dass die Partikelgrößenverteilung des Produktes aus Beispiel 2 deutlich enger ist als in Vergleichsbeispiel 1.

### Vergleichsbeispiel 3

Gemäß allgemeiner Versuchsbeschreibung, wobei mit 13 Gew.-% Butan (bezogen auf die eingesetzte Menge Minigranulat) bei einer Entspannungstemperatur von 135,2 °C ohne explizite Kühlung, d. h. K ist 0, des Entspannungsstrahls zu einer Schüttdichte von 31,8 g/l geschäumt wird.

### Beispiel 4

Wie Vergleichsbeispiel 3. Der Entspannungsstrahl wird jedoch mit Wasser mit einem Volumenstrom von 50 m³/h und einer Temperatur von 40 °C mit einem Mengenverhältnis von Kühlmittel zu Suspendiermittel von 0,98 gekühlt. Man erhält expandierte Partikel I mit einer Schüttdichte von 32,4 g/l

### Beispiel 5

Wie Beispiel 4, jedoch mit einer Kühlwassertemperatur von 25 °C. Man erhält expandierte Partikel I mit einer Schüttdichte von 34,3 g/l

Die in Vergleichsbeispiel 3, Beispiel 4 und Beispiel 5 erhaltenen Produkte werden auf Oberflächenbeschaffenheit (Glanzgrad) und Abriebfestigkeit geprüft (Rührertest). Die Ergebnisse sind in Tabelle 2 wiedergegeben.

**Tabelle 2: Bewertung des Glanzgrades und der Abriebfestigkeit**

| **Beispiel** | **Glanzgrad** | **Rührertest [Note]** |
|---|---|---|
| Vergleichsbeispiel 3 | Θ | 6 |
| Beispiel 4 | ○ | 3 |
| Beispiel 5 | + | 1 |

Die in Tabelle 2 gezeigten Ergebnisse zeigen, dass die erfindungsgemäß hergestellten Partikel einen deutlich höheren Glanzgrad und eine deutlich höhere Abreibfestigkeit aufweisen.

### Vergleichsbeispiel 6

Gemäß allgemeiner Versuchsbeschreibung, wobei mit 1,7 Gew.-% Butan (bezogen auf die eingesetzte Menge Minigranulat) und einer Entspannungstemperatur von 150,0 °C ohne explizite Kühlung, d. h. K ist 0, auf eine Schüttdichte von 58,4 g/l geschäumt wird.

### Beispiel 7

Wie Vergleichsbeispiel 6. Der Entspannungsstrahl wird jedoch mit Wasser mit einem Volumenstrom von 50 m³/h und einer Temperatur von 25 °C mit einem Mengenverhältnis von Kühlmittel zu Suspendiermittel von 0,98 gekühlt. Die Schüttdichte beträgt 59,4 g/l.

Mit den Partikeln aus Vergleichsbeispiel 6 bzw. Beispiel 7 werden Formteile in einem Blockwerkzeug mit den Maßen 1200 x 500 x 150 mm³ bzw. Sonnenblenden (Halbschalen) für KFZ in einem entsprechenden Werkzeug hergestellt (Stufen (G) und (H)). Die Ergebnisse werden in Tabelle 3 wiedergegeben.

**Tabelle 3: Beurteilung der Formteile**

| **Beispiel** | **Verklebungsneigung (Blockwerkzeug) [Anzahl Entformungsschieber]** | **Verklebungsneigung (Sonnenblenden) [visuell]** | **Glanzgrad des Formteils (Sonnenblenden)** |
|---|---|---|---|
| Vergleichsbeispiel 6 | 8 | hoch | Θ |
| Beispiel 7 | 4 | gering | + |

Die erfindungsgemäßen Beispiele und die Vergleichsbeispiele zeigen die folgenden Vorteile der expandierten Partikel I und II, hergestellt durch das erfindungsgemäße Verfahren
- ein höherer Partikelglanz bedeutet gleichzeitig eine höhere Glattheit der Oberfläche der Partikel, so dass auch glattere Formteile erhalten werden können,
- höhere Abreibfestigkeit der Partikel bedeutet weniger Staub im Prozess und somit für den Verarbeiter weniger Reinigung der Silos, der Förderstrecken und der Werkzeuge. Zusätzlich läuft der Prozess stabiler, weil sich die Düsen im Werkzeug nicht so schnell zusetzen,
- besseres Füllverhalten bringt Gewicht- und Materialeinsparung; höherer Gestaltungsspielraum für den Konstrukteur, Kosteneinsparung bei der Werkzeugkonstruktion.
- geringere Verklebungsneigung der Formteile bei der Entformung bedeutet weniger Rückstände im Werkzeug, daraus folgt, dass weniger Reinigung notwendig ist, weniger Unterbrechungen sind notwendig, weil beispielsweise das Formteil im Werkzeug klemmt, es kann werkzeugtechnisch auf Schieber/Entformungshilfen verzichtet werden oder Entformungsschritt geht schneller,
- besseres Expansionsverhalten bedeutet, dass mit dem Material Formteile mit geringeren Dichten oder komplexere Formteile bei gleicher Dichte fertigen kann, woraus eine Bauteilgewicht- bzw. Materialeinsparung resultiert,
- besserer Partikelglanz bedeutet Formteiloberflächen mit besserer Anmutung, beispielsweise bei der Herstellung von Sichtteilen, darstellen zu können,

## Patentansprüche

1. Verfahren zur Herstellung von Schaumpartikeln enthaltend mindestens ein Polyolefin, mindestens umfassend die folgenden Schritte
(A) Herstellen einer Suspension enthaltend ein Granulat enthaltend mindestens ein Polyolefin, in einem Suspendiermedium,
(B) Imprägnieren des in der Suspension aus Schritt (A) enthaltenen Granulates mit mindestens einem Treibmittel, um ein mit Treibmittel beladenes Granulat in Suspension zu erhalten, und
(C) Entspannen und Abkühlen der in Schritt (B) erhaltenen Suspension durch Inkontaktbringen mit einem geeigneten flüssigen Kühlmittel, um Schaumpartikel zu erhalten,
**dadurch gekennzeichnet, dass** das Mengenverhältnis K von Kühlmittel zu Suspendiermedium mindestens 0,3 beträgt.

2. Verfahren nach Anspruch 1, **dadurch gekennzeichnet, dass** das wenigstens eine Polyolefin ein Propylen-Ethylen-Random-Copolymer ist.

3. Verfahren nach Anspruch 1 oder 2, **dadurch gekennzeichnet, dass** das Kühlmittel eine Temperatur von weniger als 50 °C aufweist.

4. Verfahren nach einem der Ansprüche 1 bis 3, **dadurch gekennzeichnet, dass** das Suspendiermedium in Schritt (A) Wasser ist.

5. Verfahren nach einem der Ansprüche 1 bis 4, **dadurch gekennzeichnet, dass** das Kühlmittel in Schritt (C) Wasser ist.

6. Verfahren zur Herstellung von Schaumpartikeln enthaltend mindestens ein Polyolefin, mindestens umfassend die folgenden Schritte
(D) Herstellen einer Suspension enthaltend ein Granulat enthaltend mindestens ein Polyolefin, in einem Suspendiermedium,
(E) Imprägnieren des in der Suspension aus Schritt (D) enthaltenen Granulates mit mindestens einem Treibmittel, um ein mit Treibmittel beladenes Granulat in Suspension zu erhalten, und
(F) Entspannen und Abkühlen der in Schritt (E) erhaltenen Suspension durch Inkontaktbringen mit einem geeigneten Kühlmittel, um Schaumpartikel zu erhalten,
**dadurch gekennzeichnet, dass** das Kühlmittel in Schritt (F) ein Gas ist mit einer Temperatur < 0 °C.

7. Expandierte Partikel, herstellbar durch das Verfahren gemäß einem der Ansprüche 1 bis 6.

8. Schaumstoff, enthaltend expandierte Partikel gemäß Anspruch 7.

9. Formteil, herstellbar, aus den expandierten Partikeln nach Anspruch 7.

10. Formteil, enthaltend expandierte Partikel gemäß Anspruch 7.

11. Verfahren zur Herstellung eines Formteils, umfassend wenigstens die Schritte
(G) Herstellen von expandierten Partikeln nach dem Verfahren gemäß einem der Ansprüche 1 bis 6 und
(H) Aufschäumen der Schaumpartikel aus Schritt (G) in einer entsprechenden Form, um ein Formteil zu erhalten.

12. Verwendung der expandierten Partikel gemäß Anspruch 7 zur Herstellung von Formteilen.

## Claims

1. A process for producing foam particles comprising at least one polyolefin, which comprises at least the steps
(A) production of a suspension comprising a pelletized material comprising at least one polyolefin in a suspension medium,
(B) impregnation of the pelletized material comprised in the suspension from step (A) with at least one blowing agent in order to obtain a pelletized material loaded with blowing agent in suspension, and
(C) depressurization and cooling of the suspension obtained in step (B) by bringing it into contact with a suitable liquid coolant in order to obtain foam particles,
wherein the ratio C of coolant to suspension medium is at least 0.3.

2. The process according to claim 1, wherein the at least one polyolefin is a random propylene-ethylene copolymer.

3. The process according to claim 1 or 2, wherein the coolant has a temperature of less than 50°C.

4. The process according to any of claims 1 to 3, wherein the suspension medium in step (A) is water.

5. The process according to any of claims 1 to 4, wherein the coolant in step (C) is water.

6. A process for producing foam particles comprising at least one polyolefin, which comprises at least the steps
(D) production of a suspension comprising a pelletized material comprising at least one polyolefin in a suspension medium,
(E) impregnation of the pelletized material comprised in the suspension from step (D) with at least one blowing agent in order to obtain a pelletized material loaded with blowing agent in suspension, and
(F) depressurization and cooling of the suspension obtained in step (E) by bringing it into contact with a suitable coolant in order to obtain foam particles,
wherein the coolant in step (F) is a gas having a temperature of < 0°C.

7. An expanded particle which can be produced by the process according to any of claims 1 to 6.

8. A foam comprising expanded particles according to claim 7.

9. A molding which can be produced from the expanded particles according to claim 7.

10. A molding comprising expanded particles according to claim 7.

11. A process for producing a molding, which comprises at least the steps
(G) production of expanded particles by the process according to any of claims 1 to 6 and
(H) foaming of the foam particles from step (G) in an appropriate mold to give a molding.

12. The use of the expanded particles according to claim 7 for producing moldings.

## Revendications

1. Procédé pour la production de particules de mousse contenant au moins une polyoléfine, comprenant au moins les étapes suivantes consistant à
(A) préparer une suspension contenant un granulat contenant au moins une polyoléfine, dans un milieu de mise en suspension,
(B) imprégner le granulat contenu dans la suspension de l'étape (A) par au moins un agent gonflant, pour obtenir un granulat chargé d'agent gonflant en suspension et
(C) détendre et refroidir la suspension obtenue dans l'étape (B) par mise en contact avec un agent de refroidissement liquide approprié, pour obtenir des particules de mousse,
**caractérisé en ce que** le rapport de mélange K d'agent de refroidissement à milieu de mise en suspension vaut au moins 0,3.

2. Procédé selon la revendication 1, **caractérisé en ce que** ladite au moins une polyoléfine est un copolymère aléatoire de propylène-éthylène.

3. Procédé selon la revendication 1 ou 2, **caractérisé en ce que** l'agent de refroidissement présente une température inférieure à 50°C.

4. Procédé selon l'une quelconque des revendications 1 à 3, **caractérisé en ce que** le milieu de suspension dans l'étape (A) est de l'eau.

5. Procédé selon l'une quelconque des revendications 1 à 4, **caractérisé en ce que** l'agent de refroidissement dans l'étape (C) est de l'eau.

6. Procédé pour la production de particules de mousse contenant au moins une polyoléfine, comprenant au moins les étapes suivantes consistant à (D) préparer une suspension contenant un granulat contenant au moins une polyoléfine, dans un milieu de mise en suspension,
(E) imprégner le granulat contenu dans la suspension de l'étape (D) par au moins un agent gonflant, pour obtenir un granulat chargé d'agent gonflant en suspension et
(F) détendre et refroidir la suspension obtenue dans l'étape (E) par mise en contact avec un agent de refroidissement approprié, pour obtenir des particules de mousse,
**caractérisé en ce que** l'agent de refroidissement dans l'étape (F) est un gaz présentant une température < 0°C.

7. Particules expansées, pouvant être produites par le procédé selon l'une quelconque des revendications 1 à 6.

8. Mousse, contenant des particules expansées selon la revendication 7.

9. Pièce moulée pouvant être produite à partir des particules expansées selon la revendication 7.

10. Pièce moulée, contenant des particules expansées selon la revendication 7.

11. Procédé pour la production d'une pièce moulée, comprenant au moins les étapes consistant à
(G) produire des particules expansées selon le procédé selon l'une quelconque des revendications 1 à 6 et
(H) faire mousser les particules de mousse de l'étape (G) dans un moule correspondant pour obtenir une pièce moulée.

12. Utilisation des particules expansées selon la revendication 7 pour la production de pièces moulées.
